(19) **Europäisches Patentamt**
**European Patent Office**
**Office européen des brevets**

(11) **EP 4 353 494 B1**

(12) **EUROPEAN PATENT SPECIFICATION**

(45) Date of publication and mention
of the grant of the patent:
**15.10.2025 Bulletin 2025/42**

(21) Application number: **22903769.2**

(22) Date of filing: **23.06.2022**

(51) International Patent Classification (IPC):
***B60C 3/04*** *(2006.01)*    ***B60C 5/00*** *(2006.01)*
***B60C 11/00*** *(2006.01)*   ***B60C 11/03*** *(2006.01)*
***B60C 11/12*** *(2006.01)*

(52) Cooperative Patent Classification (CPC):
**B60C 5/00; B60C 3/04; B60C 11/00;**
**B60C 11/0083; B60C 11/03; B60C 11/0304;**
**B60C 11/0306; B60C 11/033; B60C 11/0332;**
**B60C 11/12;** Y02T 10/86

(86) International application number:
**PCT/JP2022/025177**

(87) International publication number:
**WO 2023/105833 (15.06.2023 Gazette 2023/24)**

(54) **PNEUMATIC RADIAL TIRE FOR PASSENGER VEHICLE**

RADIALER LUFTREIFEN FÜR PERSONENKRAFTWAGEN

PNEUMATIQUE RADIAL POUR VÉHICULE À PASSAGERS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **10.12.2021 JP 2021201247**

(43) Date of publication of application:
**17.04.2024 Bulletin 2024/16**

(73) Proprietor: **BRIDGESTONE CORPORATION**
**Chuo-ku**
**Tokyo 104-8340 (JP)**

(72) Inventors:
• **KUWAYAMA, Isao**
  **Tokyo 104-8340 (JP)**
• **HATANAKA, Shintaro**
  **Tokyo 104-8340 (JP)**

(74) Representative: **Marks & Clerk LLP**
**15 Fetter Lane**
**London EC4A 1BW (GB)**

(56) References cited:
**EP-A1- 2 774 780      WO-A1-2021/070557**
**JP-A- 2011 005 946   JP-A- 2011 148 361**
**JP-A- 2014 162 340   JP-A- 2016 210 199**
**JP-A- 2017 019 494   US-A1- 2016 001 603**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a pneumatic radial tire for passenger vehicles.

BACKGROUND

As a pneumatic radial tire for passenger vehicles that improves high fuel efficiency, a narrow and large diameter pneumatic radial tire for passenger vehicles with a defined relationship between sectional width SW and tire outer diameter OD has been proposed by the applicant (for example, see Patent Literature (PTL) 1).

CITATION LIST

Patent Literature

PTL 1: WO 2011/135774 A1
PTL 2: EP 2 774 780 A1 discloses a pneumatic radial tire for a passenger vehicle, having: a cross sectional width SW and an outer diameter OD controlled under an appropriate SW-OD relationship; and an optimized configuration of a crown portion thereof.
PTL 3: US 2016/001603 A1 discloses a pneumatic tire is designed with specific geometric and performance characteristics for stability, traction, and functionality. Its total width (SW) to outer diameter (OD) ratio is limited to $SW/OD \leq 0.3$. The ground contact width (CW) is proportioned to the total width such that $0.75 \leq CW/SW \leq 0.90.75$. The tread features an asymmetrical pattern with a groove area ratio (GR) between 10% and 25% and the tread's inner side region (GRi), from the tire equator line (CL) to the vehicle side, has a smaller groove area ratio than the outer side region (GRo).

SUMMARY

(Technical Problem)

In recent years, the development of vehicles for personal mobility has been progressing, and even among narrow and large diameter pneumatic radial tires for passenger vehicles such as mentioned above, use of tires that have a particularly small sectional width SW may be considered.
However, when the sectional width SW of a tire is small, ground contact area may deteriorate, in particular due to changes in camber angle.
On the other hand, narrow and large diameter radial tires for passenger vehicles such as those described above tend to have higher ground contact pressure on the road surface than wide and flat tires of the same load capacity tire size, due to higher circumferential belt tension rigidity. The narrow width and large diameter of the tires, combined with the higher ground contact pressure and narrower ground contact width, allows for better hydroplaning performance and a smaller groove area for drainage compared to conventional tires. Further, the dominant factor in rolling resistance of such narrow and large diameter tires is strain energy loss due to compressive strain in the tread portion.
For example, a technology has been proposed to reduce a negative ratio to 20 % or less, which improves the rigidity of the tread portion to reduce strain energy loss and improve fuel efficiency. However, such a pattern with few grooves may worsen the ability to follow uneven road surfaces, and the coefficient of friction on dry road surfaces may decrease, resulting in increased slippage, which may worsen actual fuel efficiency and ride comfort.
Therefore, it would be helpful to provide a pneumatic radial tire for passenger vehicles that is able to improve the fuel efficiency of the tire while suppressing deterioration of the ground contact area when the camber angle changes.

(Solution to Problem)

Primary features of the present invention are as follows.

(1) A pneumatic radial tire for passenger vehicles, comprising a tread, wherein

sectional width SW of the tire is less than 165 mm,

a ratio SW/OD of the sectional width SW to outer diameter OD of the tire is 0.26 or less, or the sectional width SW (mm) and the outer diameter OD (mm) of the tire satisfy the relational equation OD (mm) $\geq$ -0.0187 $\times$ SW (mm)$^2$ + 9.15 $\times$ SW (mm) - 380 (mm),

in a tire width direction cross-section, under reference conditions where the tire is mounted on a rim, filled with a prescribed internal pressure, and unloaded, when a straight line passing through a point on a tread surface on a tire equatorial plane and parallel to a tire width direction is m1, a straight line passing through ground contact edges E and parallel to the tire width direction is m2, a distance between the straight line m1 and the straight line m2 in a tire radial direction is a drop height $L_{CR}$, and a tread width of the tire is TW, a ratio $L_{CR}$/TW is greater than 0.045,

when the tire is mounted on the rim, filled with the prescribed internal pressure, and subjected to a maximum load, grooves in a contact patch consist only of grooves having a groove width of 2 mm or less, and

the contact patch includes one or more block-shaped land portions defined by two or more circumferential grooves extending in a tire circumferential direction or at an inclination angle of less than 45° to the tire circumferential direction and two or more width direction grooves extending in a tire width direction or at an inclination angle of 45° or less to the tire width direction.

Here, "ground contact edges" refers to both edges in the tire width direction of a contact patch when the tire is mounted on the rim, filled with the prescribed internal pressure, and subjected to a maximum load.

Further, "tread width" refers to a tire widthwise distance between the ground contact edges of the tire under the reference conditions where the tire is mounted on the rim, filled with the prescribed internal pressure, and unloaded.

Further, "groove width" refers to an opening width under the reference conditions described above.

Further, "contact surface of the tread" refers to a surface that extends over the entire circumference of the tire circumferential direction that is in contact with a road surface when the tire is mounted on the rim, filled with the prescribed internal pressure, and subjected to the maximum load.

Further, each "block-shaped land portion" need not only be completely demarcated by two circumferential grooves and two width direction grooves, and may include interrupted sections where the two circumferential grooves and the two width direction grooves extend intermittently.

Further, the terms "extending in the tire circumferential direction", "extending at an inclination angle ... to the tire circumferential direction", "extending in the tire width direction", and "extending at an angle to the tire width direction" include, in addition to straight lines, extending in a in a zigzag shape or bent shape, in which case the inclination angle is the inclination angle of a straight line connecting end points.

Further, when a groove is at a position on the tire equatorial plane, the straight line m1 is drawn along a virtual line as if there were no such groove.

Here, "rim" refers to an approved rim of an applicable size that is currently or will be described in an industrial standard valid for the region where the tire is produced and used, in Japan the JATMA YEAR BOOK of the Japan Automobile Tyre Manufacturers Association (JATMA), in Europe the STANDARDS MANUAL of The European Tyre and Rim Technical Organisation (ERTRO), and in the U.S.A. the YEAR BOOK of The Tire and Rim Association, Inc. (TRA). An approved rim in the STANDARDS MANUAL of ETRTO is the Measuring Rim, and in the YEAR BOOK of TRA is the Design Rim. That is, the "rim" of a "wheel" above includes not only current sizes but also sizes that may be included in the industrial standard in the future. An example of a size to be described in the future is a size described in "FUTURE DEVELOPMENTS" in the 2013 publication of ETRTO. However, in a case of a size not described in the industrial standards above, a rim having a width that corresponds to tire bead width is referenced.

Further, "prescribed internal pressure" refers to an air pressure (maximum air pressure) corresponding to a maximum load capability of a single wheel of an applicable size and ply rating described in the industrial standard of JATMA or the like. In the case of a size that is not described in the industrial standards above, "prescribed internal pressure" refers to an air pressure (maximum air pressure) corresponding to a maximum load capability prescribed for each vehicle on which the tire is mounted.

Further, "maximum load" refers to a load corresponding to the maximum load capability mentioned above.

(2) A pneumatic radial tire for passenger vehicles, comprising a tread, wherein

sectional width SW of the tire is less than 165 mm,

a ratio SW/OD of the sectional width SW to outer diameter OD of the tire is 0.26 or less, or the sectional width SW (mm) and the outer diameter OD (mm) of the tire satisfy the relational equation OD (mm) $\geq$ -0.0187 $\times$ SW (mm)$^2$ + 9.15 $\times$ SW (mm) - 380 (mm),

ground contact length on a tire equatorial plane is longer than an average value of ground contact lengths at positions 20 % of ground contact width inward in a tire width direction from both ground contact edges,

when the tire is mounted on the rim, filled with the prescribed internal pressure, and subjected to a maximum load, grooves in a contact patch consist only of grooves having a groove width of 2 mm or less, and

the contact patch includes one or more block-shaped land portions defined by two or more circumferential grooves extending in a tire circumferential direction or at an inclination angle of less than 45° to the tire circumferential direction and two or more width direction grooves extending in a tire width direction or at an inclination angle of 45° or less to the tire width direction.

Here, "ground contact length" refers to a tire circumferential direction length of the contact patch when the tire is mounted on the rim, filled with the prescribed internal pressure, and loaded with the maximum load, and "ground contact width" refers to a maximum width of the contact patch in the tire width direction when the tire is mounted on the rim, filled with the prescribed internal pressure, and loaded with the maximum load.

When a circumferential groove is at a position where the ground contact length is to be measured, the ground contact length is measured along a virtual line as if there were no circumferential groove.

(3) A pneumatic radial tire for passenger vehicles, comprising a tread, wherein

sectional width SW of the tire is less than 165 mm,

a ratio SW/OD of the sectional width SW to outer diameter OD of the tire is 0.26 or less, or the sectional width SW (mm) and the outer diameter OD (mm) of the tire satisfy the relational equation OD (mm) $\geq$ -0.0187 × SW (mm)$^2$ + 9.15 × SW (mm) - 380 (mm),

gauge of the tread on a tire equatorial plane is greater than an average value of gauges of the tread at positions 20 % of ground contact width inward in a tire width direction from both ground contact edges,

when the tire is mounted on a rim, filled with a prescribed internal pressure, and subjected to a maximum load, grooves in a contact patch consist only of grooves having a groove width of 2 mm or less,

the contact patch includes one or more block-shaped land portions defined by two or more circumferential grooves extending in a tire circumferential direction or at an inclination angle of less than 45° to the tire circumferential direction and two or more width direction grooves extending in a tire width direction or at an inclination angle of 45° or less to the tire width direction.

Here, "gauge" refers to the gauge from an outermost reinforcement layer in the tire radial direction to the tread surface among the reinforcement layers arranged outward from the crown portion of the carcass in the tire radial direction, and is measured in a normal line direction relative to the tread surface under the reference conditions. Further, when the location where the gauge is to be measured includes a circumferential groove, the gauge is measured along a virtual line as if there were no circumferential groove.

Hereinafter, "block-shaped land portion" refers to an area of the tread in the developed view.

Further, "diameter" of a hole-shaped sipe means maximum diameter in a planar view.

(Advantageous Effect)

According to the present invention, a pneumatic radial tire for passenger vehicles is provided that is able to improve the fuel efficiency of the tire while suppressing deterioration of the ground contact area when the camber angle changes.

BRIEF DESCRIPTION OF THE DRAWINGS

In the accompanying drawings:

FIG. 1 is a schematic diagram illustrating sectional width SW and outer diameter OD of a tire;
FIG. 2 is a tire width direction cross-section diagram of a pneumatic radial tire for passenger vehicles according to an embodiment of the present invention;
FIG. 3 is a diagram illustrating a groove pattern arranged on a contact patch of a pneumatic radial tire for passenger vehicles according to an embodiment of the present invention;
FIG. 4 is a diagram illustrating a groove pattern arranged on a contact patch of a pneumatic radial tire for passenger vehicles according to another embodiment of the present invention;
FIG. 5 is a diagram illustrating a groove pattern arranged on a contact patch of a pneumatic radial tire for passenger vehicles according to another embodiment of the present invention;
FIG. 6 is a schematic diagram for explanation of changes in ground contact area; and
FIG. 7 is a schematic diagram for explanation of rectangular ratio.

DETAILED DESCRIPTION

Hereinafter, embodiments of the present invention are illustratively described in detail, with reference to the drawings.

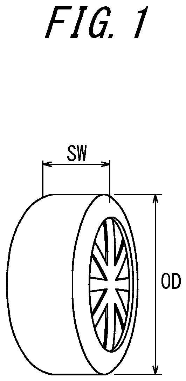

FIG. 1 is a schematic diagram illustrating sectional width SW and outer diameter OD of a tire.

The pneumatic radial tire for passenger vehicles (hereinafter also referred to simply as "tire") according to an embodiment of the present invention has a sectional width SW of less than 165 (mm), and a ratio SW/OD of the sectional width SW to the outer diameter OD of the tire is 0.26 or less, forming a narrow width and large diameter shape. By making the sectional width SW of the tire narrow, relative to the outer diameter OD of the tire, air resistance may be reduced, and by making the outer diameter OD of the tire large, relative to the sectional width SW of the tire, deformation of tread rubber in the vicinity of the contact patch of the tire may be controlled and rolling resistance may be reduced. Accordingly, fuel efficiency of the tire may be improved. The ratio SW/OD is preferably 0.25 or less, and more preferably 0.24 or less.

The ratio above is preferably satisfied when the internal pressure of the tire is 200 kPa or greater, more preferably satisfied when the internal pressure of the tire is 220 kPa or greater, and even more preferably satisfied when the internal pressure of the tire is 280 kPa or greater. This allows rolling resistance to be reduced. On the other hand, the ratio above is preferably satisfied when the internal pressure of the tire is 350 kPa or less. This allows ride comfort to be improved.

Here, the sectional width SW of the tire is preferably 105 mm to 145 mm, and more preferably 115 mm to 135 mm.

Further, an aspect ratio of the tire when the sectional width SW and the outer diameter OD of the tire satisfy the ratio above is preferably 45 to 70, and more preferably 45 to 65.

The tire is not particularly limited to a specific size. Example tire sizes include 105/50R16, 115/50R17, 125/55R20, 125/60R18, 125/65R19, 135/45R21, 135/55R20, 135/60R17, 135/60R18, 135/60R19, 135/65R19, 145/45R21, 145/55R20, 145/60R16, 145/60R17, 145/60R18, 145/60R19, 145/65R19, 155/45R18, 155/45R21, 155/55R18, 155/55R19, 155/55R21, 155/60R17, 155/65R18, 155/70R17, and 155/70R19.

Alternatively, the sectional width SW of the tire is less than 165 mm, and the sectional width SW (mm) and the outer diameter OD (mm) of the tire satisfy the following relational equation:

$$\text{OD (mm)} \geq -0.0187 \times \text{SW (mm)}^2 + 9.15 \times \text{SW (mm)} - 380$$

That is, the tire has a narrow width and a large diameter.

Satisfying the relational equation above reduces air resistance and reduces rolling resistance, thereby improving fuel efficiency of the tire.

According to a third aspect, the sectional width SW and the outer diameter OD of the tire, in addition to satisfying the relational equation above, are such that the ratio SW/OD is preferably 0.26 or less, more preferably 0.25 or less, and even more preferably 0.24 or less. This allows fuel efficiency of the tire to be further improved.

The relational equation and/or the ratio are preferably satisfied when the internal pressure of the tire is 200 kPa or greater, more preferably when the internal pressure of the tire is 220 kPa or greater, and even more preferably when the internal pressure of the tire is 280 kPa or greater. This allows rolling resistance to be reduced. On the other hand, the relational equation and/or the ratio are preferably satisfied when the internal pressure of the tire is 350 kPa or less. This allows ride comfort to be improved.

Here, the sectional width SW of the tire is preferably 105 mm to 145 mm, and more preferably 115 mm to 135 mm.

Further, the aspect ratio of the tire when the sectional width SW and the outer diameter OD of the tire satisfy the relational equation above is preferably 45 to 70, and more preferably 45 to 65.

The tire is not particularly limited to a specific size. Example tire sizes include 105/50R16, 115/50R17, 125/55R20, 125/60R18, 125/65R19, 135/45R21, 135/55R20, 135/60R17, 135/60R18, 135/60R19, 135/65R19, 145/45R21, 145/55R20, 145/60R16, 145/60R17, 145/60R18, 145/60R19, 145/65R19, 155/45R18, 155/45R21, 155/55R18, 155/55R19, 155/55R21, 155/60R17, 155/65R18, 155/70R17, and 155/70R19.

The tire according to the present embodiment is a pneumatic radial tire for passenger vehicles. This tire is particularly suitable for use as a tire mounted on a vehicle for personal mobility.

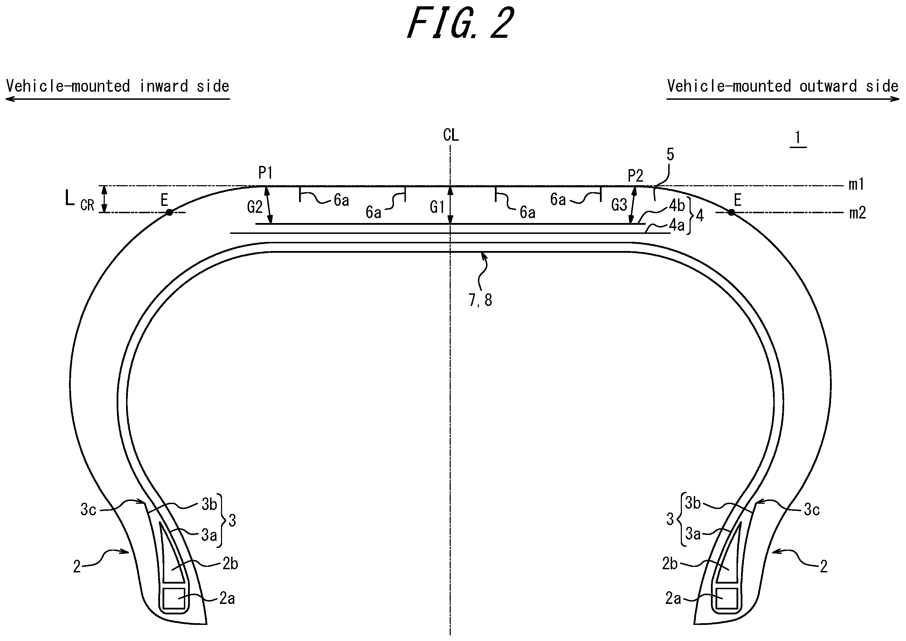

FIG. 2 is a tire width direction cross-section diagram of the pneumatic radial tire for passenger vehicles according to an embodiment of the present invention. FIG. 2 illustrates a tire width direction cross-section under reference conditions, where the tire is mounted on a rim, filled to a prescribed internal pressure, and unloaded. As illustrated in FIG. 2, the tire 1 includes a carcass 3 consisting of plies of radially arranged cords toroidally extending between a pair of bead portions 2. Further, the tire 1 includes a belt 4 consisting of two belt layers 4a, 4b in the illustrated example, and a tread 5, in this order, outward from the carcass 3 in the tire radial direction.

In this example, a bead core 2a is embedded in each of the pair of the bead portions 2. According to the present invention, a cross-sectional shape and material of the bead core 2a are not particularly limited, and may have a structure normally used in a pneumatic radial tire for passenger vehicles. According to the present invention, the bead core 2a may be divided into a plurality of small bead cores. Alternatively, according to the present invention, the structure need not include the bead core 2a.

The tire 1 in the illustrated example includes a bead filler 2b that has an approximately triangular shape in cross-section, disposed outward from the bead core 2a in the tire radial direction. The cross-sectional shape of the bead filler 2b is not limited to this example, and the material of the bead filler 2b is also not particularly limited. Alternatively, the tire may be made lighter by not including the bead filler 2b.

According to the present embodiment, the tire 1 may have a structure that includes a rim guard. Further, according to the present embodiment, the bead portion 2 may further include an additional member such as a rubber layer, a cord layer, or the like for reinforcement or other purposes. Such an additional member may be provided at various positions with respect to the carcass 3 and the bead filler 2b.

In the example illustrated in FIG. 2, the carcass 3 consists of a single carcass ply. However, according to the present invention, the number of carcass plies is not particularly limited and may be two or more. Further, in the example illustrated in FIG. 2, the carcass 3 includes a toroidally extending carcass body portion 3a that spans between the pair of the bead portions 2 and turn-up portions 3b that are turned up from the carcass body portion 3a around the bead cores 2a. However, according to the present invention, the carcass turn-up portions 3b may be wrapped around the bead cores 2a, or may be sandwiched between a number of divided small bead cores. According to the illustrated example, ends 3c of the carcass turn-up portions 3b are positioned outward in the tire radial direction from an outermost end in the tire radial direction of the bead fillers 2b and inward in the tire radial direction from a tire maximum width position. This allows reduction of the weight of the tire while maintaining rigidity of the sidewall portion. However, according to the present invention, the ends 3c of the carcass turn-up portions 3b may be positioned inward in the tire radial direction from the outermost end in the tire radial direction of the bead filler 2b, or outward in the tire radial direction from the tire maximum width position. Alternatively, the ends 3c of the carcass turn-up portions 3b may be an envelope structure, positioned inward in the tire width direction of ends of the belt 4 (for example, ends of the belt layer 4b) between the carcass body portion 3a and the belt 4 in the tire radial direction. Further, in a case where the carcass 3 is formed of a plurality of carcass plies, the positions of the ends 3c of the carcass turn-up portions 3b (for example, in the tire radial position) may be the same or different among the carcass plies. The number of cords in the carcass 3 is not particularly limited, and may be in a range of 20 cords to 60 cords per 50 mm, for example. Further, a carcass line may adopt various structures. For example, a carcass maximum width position in the tire radial direction may be closer to either the bead portions 2 or the tread 5. For example, the carcass maximum width position may be in a range of 50 % to 90 % of a tire section height, outward in the tire radial direction from a bead base line. The above term "radially arranged" indicates at least 85° to the tire circumferential direction, preferably 90° to the tire circumferential direction.

The tire according to the present embodiment preferably includes at least one inclined belt layer consisting of a rubberized layer of cords extending at an angle to the tire circumferential direction, and two layers is most preferable for the combination of weight reduction and suppression of contact patch distortion. From the viewpoint of weight reduction, one belt layer may be used, and from the viewpoint of suppressing distortion of the contact patch, three or more layers may be used. In the example illustrated in FIG. 2, of the two belt layers 4a and 4b, the width in the tire width direction of the belt layer 4b outward in the tire radial direction is smaller than the width in the tire width direction of the belt layer 4a inward in the tire radial direction. However, the width in the tire width direction of the belt layer 4b outward in the tire radial direction may be greater than or the same as the width in the tire width direction of the belt layer 4a inward in the tire radial direction. The width in the tire width direction of the belt layer that has the greatest width in the tire width direction (the belt layer 4a in the illustrated example) is preferably 90 % to 115 % of the ground contact width, and more preferably 100 % to 105 % of the ground contact width. Here, "ground contact width" refers to the distance in the tire width direction between the ground contact edges E described above.

According to the present embodiment, metal cords, in particular steel cords, are most preferable as belt cords of the belt layers 4a, 4b, but non-metal, for example, organic fiber cords (such as Kevlar® (Kevlar is a registered trademark in Japan, other countries, or both)) may be used. The steel cords may include steel as a main component, and may contain various micro inclusions such as carbon, manganese, silicon, phosphorus, sulfur, copper, and chromium. According to the present embodiment, the belt cords of the belt layers 4a, 4b may be monofilament cords, cords with a plurality of filaments drawn together, or cords with a plurality of filaments twisted together. Various twist structures may be adopted, including cross-section structure, twist pitch, twist direction, and distance between adjacent filaments. Cords obtained by twisting filaments of different materials may also be used, which may employ various twist structures such as single twist, layer twist, and multi twist, without being limited to any particular cross-section structure.

According to the present embodiment, an inclination angle of the belt cords of the belt layers 4a, 4b is preferably 10° or more with respect to the tire circumferential direction. According to the present embodiment, the inclination angle of the belt cords of the belt layers 4a, 4b is preferably a high angle, specifically 20° or more, preferably 35° or more, and more preferably in a range of 55° to 85° with respect to the tire circumferential direction. By setting the inclination angle to 20° or more (preferably 35° or more), the rigidity with respect to the tire width direction may be increased, and steering stability, particularly when cornering, may be improved. Further, shearing deformation of the inter-layer rubber may be reduced, and rolling resistance may be reduced.

In the illustrated example, the tread rubber of the tread 5 consists of one layer. However, according to the present embodiment, the tread rubber of the tread 5 may be formed by a plurality of different rubber layers stacked in the tire radial direction. The plurality of rubber layers may be different from one another in terms of tangent loss, modulus, hardness, glass transition temperature, material, or the like. Further, ratios of thicknesses of the plurality of rubber layers in the tire radial direction may vary in the tire width direction. Further, a circumferential main groove bottom and the like may be composed of a rubber layer different from that in a surrounding region. Further, the tread rubber of the tread 5 may be formed by a plurality of different rubber layers in the tire width direction. The plurality of rubber layers may be different from one another in terms of tangent loss, modulus, hardness, glass transition temperature, material, or the like. Further, ratios of thicknesses of the plurality of rubber layers in the tire width direction may vary in the tire radial direction. Further, rubber layers in a limited region, such as in the vicinity of a circumferential main groove alone, in the vicinity of the ground contact edges E alone, in the shoulder land portions alone, or in the center land portion, may be formed as rubber layers different from the surroundings.

The tire 1 according to the present embodiment includes an inner liner 8 on an inner surface 7 of the tire (also referred to simply as the tire inner surface 7). Thickness of the inner liner 8 is preferably about 1.5 mm to 2.8 mm. This may effectively reduce cabin noise in a range of 80 Hz to 100 Hz. An air permeability coefficient of a rubber composition of the inner liner 8 is preferably $1.0 \times 10^{-14}$ cc·cm/(cm$^2$·s·cmHg) or greater and $6.5 \times 10^{-10}$ cc·cm/(cm$^2$·s·cmHg) or less.

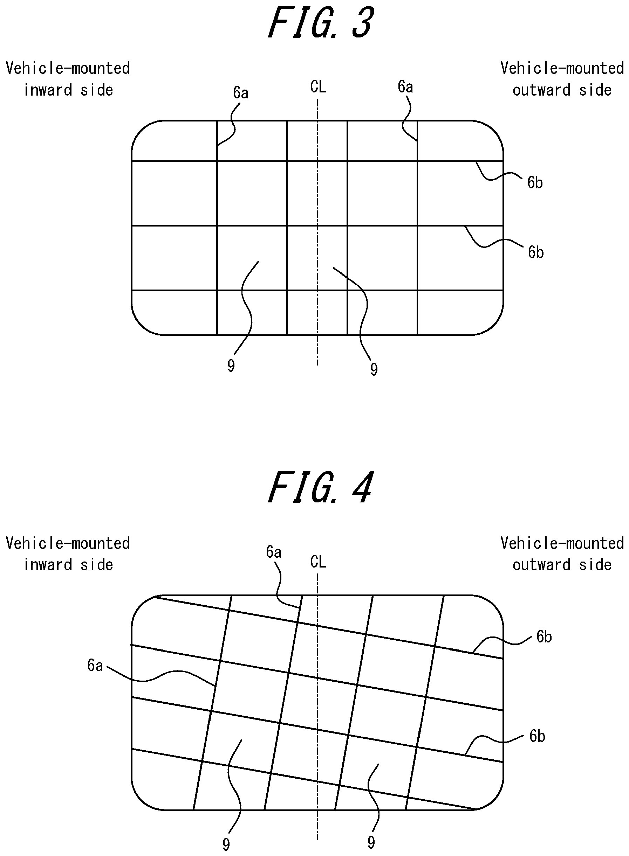

FIG. 3 is a diagram illustrating a groove pattern arranged on the contact patch of the pneumatic radial tire for passenger vehicles according to an embodiment of the present invention.

As illustrated in FIG. 3, in this example, when the tire 1 is mounted on the rim, filled with the prescribed internal pressure, and subjected to a maximum load, the tire 1 is configured so that grooves 6a, 6b in the contact patch consist only of grooves 6 having a groove width of 2 mm or less. According to the present embodiment, the grooves 6a, 6b are sipes having a groove width (opening width) of 2 mm or less, but may be narrow grooves.

As illustrated in FIG. 3, the tire 1 includes, in the contact patch, two or more circumferential grooves 6a extending in the tire circumferential direction or at an inclination angle of less than 45° to the tire circumferential direction and two or more width direction grooves 6b extending in the tire width direction or at an inclination angle of 45° or less to the tire width direction. According to the present embodiment, the circumferential grooves 6a are circumferential sipes each having a groove width of 2 mm or less, and the width direction grooves 6b are width direction sipes each having a groove width of 2 mm or less. In this example, the circumferential sipes 6a and the width direction sipes 6b are flat plate-like sipes. Here, "flat plate-like" means that the groove width is substantially constant from the groove opening to the groove bottom, but the groove bottom may have curvature, or the groove may be a so-called flask-shaped sipe with a widened groove bottom. Further, the sipes may be at least partially closed in the depth direction of the sipes when in ground contact. For example, either or both of the circumferential sipes 6a and the width direction sipes 6b may be so-called three-dimensional sipes where the inner wall of the sipe has a uneven shape along the depth direction.

In the illustrated example, the circumferential sipes 6a extend in the tire circumferential direction, but the circumferential sipes 6a may extend at an angle to the tire circumferential direction. Further, in the illustrated example, the width direction sipes 6b extend in the tire width direction, but the width direction sipes 6b may extend at an angle to the tire width direction.

In the illustrated example, there are four circumferential sipes 6a and three width direction sipes 6b in the contact patch, but the number of the circumferential sipes 6a need only be two or more in the contact patch, and the number of the width direction sipes 6b also need only be two or more in the contact patch.

In this example, there are two or more circumferential grooves 6a that extend across and intersect two or more width direction grooves 6b, and two or more width direction grooves 6b that extend across and intersect two or more circumferential grooves 6a.

The tire 1 according to the present embodiment includes one or more (six in the illustrated example) block-shaped land portions 9 that are defined by two or more circumferential grooves (circumferential sipes in this example) 6a and two or more width direction grooves (width direction sipes in this example) 6b. In the illustrated example, the block-shaped land portions 9 are rectangular (in the developed view).

As illustrated in FIG. 2, according to the present embodiment, in the tire width direction cross-section, under the reference conditions described above, when a straight line passing through a point on the tread surface on the tire equatorial plane CL and parallel to the tire width direction is m1, a straight line passing through the ground contact edges E and parallel to the tire width direction is m2, a distance between the straight line m1 and the straight line m2 in the tire radial direction is a drop height $L_{CR}$, and the tread width of the tire 1 is TW, a ratio $L_{CR}$/TW is greater than 0.045 (Configuration 1).

The following is an explanation of effects of the pneumatic radial tire for passenger vehicles according to the present embodiment.

The pneumatic radial tire for passenger vehicles according to the present embodiment has a narrow sectional width SW of less than 165 mm, even among narrow width, large diameter tires for which the sectional width SW and the outer diameter satisfy the relational equation described above. According to such a tire, air resistance in particular may be reduced, and rolling resistance may also be reduced, thereby improving the fuel efficiency of the tire.

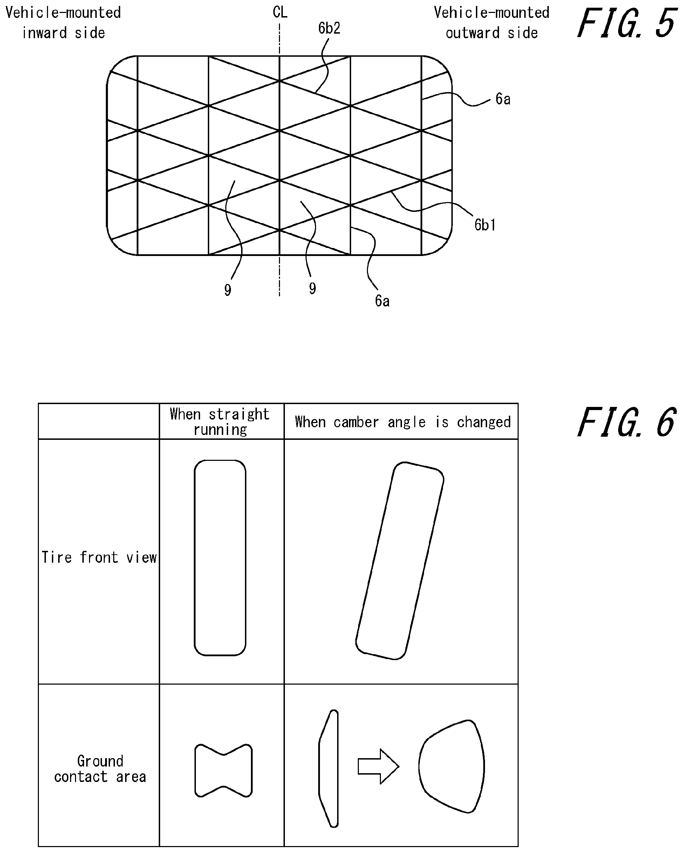

However, as schematically illustrated on a left side of the arrow in FIG. 6, with such a tire, the ground contact area may become too elongated when the camber angle changes, such as during cornering, and the ground contact area may deteriorate, resulting in reduced steering stability and the like.

To address this, first, in the tire according to the present embodiment, the ratio $L_{CR}$/TW is greater than 0.045. This results in a tire that has a relatively round crown shape, and therefore a rounded ground contact area, with the shoulder portion having a shorter ground contact length relative to the center portion. This inhibits the ground contact area from becoming too elongated when the camber angle changes, as illustrated schematically on the right side of the arrow in FIG. 6, and suppresses deterioration of the ground contact area.

Further, the narrow width tire described above has excellent drainage to the side of the tire, and therefore even when the tire has only the grooves 6a, 6b with the groove width of 2 mm or less, drainage performance may be sufficiently secured.

As mentioned above, such a pattern with few grooves may worsen the ability to follow uneven road surfaces.

To address this, according to the present embodiment, the contact patch includes one or more block-shaped land portions 9 defined by two or more circumferential grooves 6a extending in a tire circumferential direction or at an inclination angle of less than 45° to the tire circumferential direction and two or more width direction grooves 6b extending in a tire width direction or at an inclination angle of 45° or less to the tire width direction. Accordingly, compressive rigidity may be reduced (compared to a pattern without grooves).

Further, in the tire 1 according to the present embodiment, the grooves in the contact patch consist only of grooves having the groove width of 2 mm or less, thus securing a footprint area and reducing average ground contact pressure on tread rubber (compared to a pattern of grooves having a groove width greater than 2 mm). A low-loss rubber compound commonly used for eco-friendly tires is preferably used for the tread rubber compound.

Thus, the tire's ability to follow the road surface may be improved by reducing the compressive rigidity while maintaining a low ground contact pressure. This may further improve fuel efficiency by practically reducing the rolling resistance. Further, this may also suppress degradation of ride comfort.

In this example, the circumferential sipes 6a and the width direction sipes 6b are provided, but the same effect is obtainable even with narrow grooves.

Further, as mentioned above, each block-shaped land portion need not only be completely demarcated by two circumferential grooves and two width direction grooves, and may include interrupted sections where the two circumferential grooves and the two width direction grooves extend intermittently. For example, this includes cases where a block-shaped land portion is completely demarcated by a virtual line that continues an extension of a groove.

The ratio $L_{CR}$/TW is more preferably 0.05 or greater. This is because deterioration of the ground contact area may be further suppressed. On the other hand, from the viewpoint of reducing rolling resistance, the ratio $L_{CR}$/TW is preferably 0.1 or less.

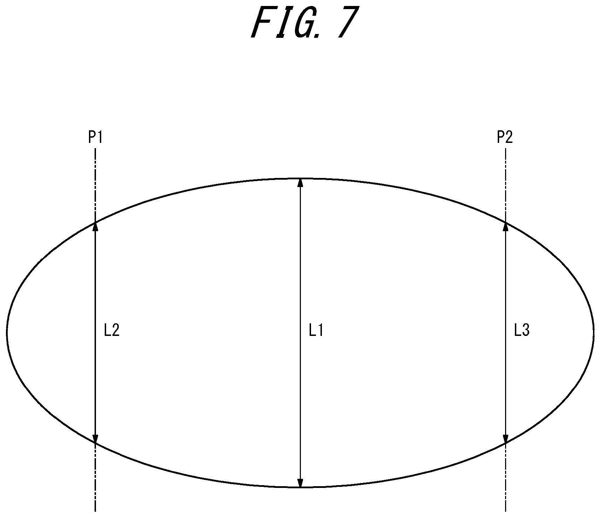

FIG. 7 is a schematic diagram for explanation of the ground contact area. As another aspect, a ground contact length L1 on the tire equatorial plane CL is longer than an average value of ground contact lengths L2 and L3 ((L2+L3)/2) at tire width direction positions P1 and P2, which are spaced 20 % of the ground contact width inward in the tire width direction from both ground contact edges E (Configuration 2). Even in this case, the ground contact area may be rounded, with the shoulder portion having a shorter ground contact length relative to the center portion. This inhibits the ground contact area from becoming too elongated when the camber angle changes, as illustrated schematically on the right side of the arrow in FIG. 6, and suppresses deterioration of the ground contact area. The ground contact length L1 is preferably 1.1 times the average of the ground contact lengths L2 and L3 or greater. On the other hand, from the viewpoint of uneven wear mitigation performance, the ground contact length L1 is preferably 1.5 times the average of the ground contact lengths L2 and L3 or less.

Further, as another aspect, as illustrated in FIG. 2, a gauge G1 of the tread on the tire equatorial plane is greater than an average value ((G2+G3)/2) of gauges G2 and G3 of the tread at positions P1 and P2, which are spaced 20 % of the ground contact width inward in the tire width direction from both ground contact edges E (Configuration 3). This results in a tire that has a relatively round crown shape, and therefore a rounded ground contact area, with the shoulder portion having a shorter ground contact length relative to the center portion. This inhibits the ground contact area from becoming too elongated when the camber angle changes, as illustrated schematically on the right side of the arrow in FIG. 6, and suppresses deterioration of the ground contact area. Further, the thinner gauges at the positions P1 and P2 provide greater tread rigidity at these positions, which is advantageous for improving steering stability when cornering. The gauge G1 is preferably 1.1 times the average of the gauges G2 and G3 or greater. On the other hand, from the viewpoint of uneven wear mitigation performance, the gauge G1 is preferably 1.5 times the average value of the gauges G2 and G3 or less.

According to the present invention, it suffices that any one or more of the above Configurations 1 to 3 are satisfied, and any two or all three may be satisfied.

An area of the block-shaped land portions 9 (one block-shaped land portion) is preferably 1/10 or less of the area of the contact patch. More preferably, there is a plurality of block-shaped land portions 9 and for 80 % or more of the block-shaped land portions 9, the area of one block-shaped land portion 9 is 1/10 or less of the area of the contact patch. Even more preferably, the area of the block-shaped land portion 9 having the largest area among the plurality of block-shaped land portions 9 is 1/10 or less of the area of the contact patch. This is because the area of each individual block-shaped land portion 9 may be made smaller and the blocks may be densely packed together, further improving the ability to follow the road surface and more effectively realizing the effects described above.

Although narrow tires are advantageous for macro drainage phenomena such as hydroplaning, local drainage performance of the block contact patch, so-called micro drainage performance, is difficult to ensure when the volume of the grooves is reduced, and further improvement of wet performance is required.

According to the present embodiment, as illustrated in FIG. 3, the width direction grooves are connected to the ground contact edge on one or the other side in the tire width direction (in this example, connected to the ground contact edges on both sides). This improves the local drainage of the ground surface, the so-called micro drainage performance, and further improves wet performance.

Further, it is preferable to have a width direction sipe or a hole-shaped sipe having a diameter of 2 mm or less on a vehicle-mounted outward side, which is a tire width direction half portion with the tire equatorial plane as a boundary. This is because the compressive rigidity of the vehicle-mounted outward side block-shaped land portion may be appropriately reduced to make the ground contact pressure more uniform.

FIG. 4 is a diagram illustrating a groove pattern arranged on the contact patch of the pneumatic radial tire for passenger vehicles according to another embodiment of the present invention. In the example illustrated in FIG. 4, the circumferential grooves (circumferential sipes) 6a extend at an angle to the tire circumferential direction, and the width direction grooves (width direction sipes) 6b extend at an angle to the tire width direction. In this example, the circumferential grooves and the width direction grooves intersect at approximately right angles, and therefore the block-shaped land portions 9 are rectangular (in this developed view), but this is merely an example and not limiting. On one hand, two or more circumferential grooves parallel to each other and two or more width direction grooves parallel to each other preferably make the block-shaped land portions 9 rectangular (in this developed view), but the block-shaped land portions 9 may have a parallelogram shape, for example (in this developed view). In such a case, the angle of the smallest of the four corners is preferably 45° or more to prevent the corners from becoming too sharp.

FIG. 5 is a diagram illustrating a groove pattern arranged on the contact patch of the pneumatic radial tire for passenger vehicles according to another embodiment of the present invention. In the example illustrated in FIG. 5, the circumferential grooves 6a extend in the tire circumferential direction, but the width direction grooves differ from the pattern illustrated in FIG. 4 in that there are two different width direction grooves 6b1, 6b2 that have different directions of inclination relative to the tire width direction and intersect each other. In this example, the block-shaped land portions 9 are triangular (in this developed view). According to the pattern illustrated in FIG. 5, the block-shaped land portions may be more densely arranged to further improve the ability to follow the road surface, and more effectively realize the effects described above.

Here, for example, when the block-shaped land portions 9 are rectangular or parallelogram shaped, a ratio of the shortest side to the longest side of the block-shaped land portions 9 is preferably 0.7 or greater. This is because, particularly when there is a plurality of the block-shaped land portions 9 in the contact patch, the effect of the block-shaped land portions 9 supporting each other is more uniformly obtainable in each direction.

<Tire/rim assembly>

The tire/rim assembly herein consists of the pneumatic radial tire for passenger vehicles assembled on a rim. According to the tire/rim assembly, the same effects described for the pneumatic radial tire for passenger vehicles are obtainable. The internal pressure of the tire/rim assembly is preferably 200 kPa or greater, more preferably 220 kPa or greater, and even more preferably 280 kPa or greater. This is because a higher internal pressure may further reduce rolling resistance. On the other hand, the internal pressure of the tire/rim assembly is preferably 350 kPa or less. This allows ride comfort to be improved.

<Pneumatic radial tire for passenger vehicles usage method>

Here, the pneumatic radial tire for passenger vehicles usage method is use of the pneumatic radial tire for passenger vehicles described above. According to the pneumatic radial tire for passenger vehicles usage method, the same effects described for the pneumatic radial tire for passenger vehicles are obtainable. Use of an internal pressure of 200 kPa or greater is preferable, use of 220 kPa or greater is more preferable, and use of 280 kPa or greater is even more preferable. This is because a higher internal pressure may further reduce rolling resistance. On the other hand, use of an internal pressure of 350 kPa or less is preferable. This allows ride comfort to be improved.

As above, embodiments of the present invention have been described, but the present invention is not limited to the above embodiments. For example, in the above examples, the structure is symmetrical about the tire equatorial plane CL, except for the groove arrangement, but asymmetrical portions may be present. For example, the ground contact lengths L2 and L3 may be different from each other. For example, the gauges G2 and G3 may be different from each other. Other variations and modifications are possible within the scope of the appended claims.

REFERENCE SIGNS LIST

1:  pneumatic radial tire for passenger vehicles (tire)
2:  bead portions, 2a: bead core, 2b: bead filler, 3: carcass
4:  belt, 4a, 4b: belt layers, 5: tread
6:  circumferential main groove, 7: tire inner surface, 8: inner liner
9:  block-shaped land portions, CL: tire equatorial plane

**Claims**

1.  A pneumatic radial tire (1) for passenger vehicles, comprising a tread (5), wherein

     sectional width SW of the tire (1) is less than 165 mm,
     a ratio SW/OD of the sectional width SW to outer diameter OD of the tire is 0.26 or less, or the sectional width SW (mm) and the outer diameter OD (mm) of the tire (1) satisfy the relational equation OD (mm) $\geq$ -0.0187 $\times$ SW (mm)$^2$ + 9.15 $\times$ SW (mm) - 380 (mm),
     in a tire width direction cross-section, under reference conditions where the tire (1) is mounted on a rim, filled with a prescribed internal pressure, and unloaded, when a straight line passing through a point on a tread surface on a tire equatorial plane (CL) and parallel to a tire width direction is m1, a straight line passing through ground contact edges E and parallel to the tire width direction is m2, a distance between the straight line m1 and the straight line m2 in a tire radial direction is a drop height $L_{CR}$, and a tread width of the tire (1) is TW, a ratio $L_{CR}$/TW is greater than 0.045,
     when the tire (1) is mounted on the rim, filled with the prescribed internal pressure, and subjected to a maximum load, grooves in a contact patch consist only of grooves having a groove width of 2 mm or less,
     the contact patch includes one or more block-shaped land portions (9) defined by two or more circumferential grooves extending in a tire circumferential direction or at an inclination angle of less than 45° to the tire circumferential direction and two or more width direction grooves extending in a tire width direction or at an inclination angle of 45° or less to the tire width direction,
     "ground contact edges" refers to both edges in the tire width direction of a contact patch when the tire is mounted on the rim, filled with the prescribed internal pressure, and subjected to a maximum load, and
     "prescribed internal pressure" refers to an air pressure (maximum air pressure) corresponding to a maximum load capability of a single wheel of an applicable size and ply rating described in the industrial standard of JATMA or the like, and in the case of a size that is not described in the industrial standards above, "prescribed internal pressure" refers to an air pressure (maximum air pressure) corresponding to a maximum load capability prescribed for each vehicle on which the tire is mounted.

2.  A pneumatic radial tire (1) for passenger vehicles, comprising a tread (5), wherein

     sectional width SW of the tire (1) is less than 165 mm,
     a ratio SW/OD of the sectional width SW to outer diameter OD of the tire (1) is 0.26 or less, or the sectional width SW (mm) and the outer diameter OD (mm) of the tire (1) satisfy the relational equation OD (mm) $\geq$ -0.0187 $\times$ SW (mm)$^2$ + 9.15 $\times$ SW (mm) - 380 (mm),
     ground contact length on a tire equatorial plane (CL) is longer than an average value of ground contact lengths at positions 20 % of ground contact width inward in a tire width direction from both ground contact edges,
     when the tire (1) is mounted on a rim, filled with a prescribed internal pressure, and subjected to a maximum load, grooves in a contact patch consist only of grooves having a groove width of 2 mm or less,
     the contact patch includes one or more block-shaped land portions (9) defined by two or more circumferential grooves extending in a tire circumferential direction or at an inclination angle of less than 45° to the tire circumferential direction and two or more width direction grooves extending in a tire width direction or at an inclination angle of 45° or less to the tire width direction,
     "ground contact edges" refers to both edges in the tire width direction of a contact patch when the tire is mounted on the rim, filled with the prescribed internal pressure, and subjected to a maximum load,
     "prescribed internal pressure" refers to an air pressure (maximum air pressure) corresponding to a maximum load capability of a single wheel of an applicable size and ply rating described in the industrial standard of JATMA or the like, and in the case of a size that is not described in the industrial standards above, "prescribed internal pressure" refers to an air pressure (maximum air pressure) corresponding to a maximum load capability prescribed for each vehicle on which the tire is mounted,

"ground contact length" refers to a tire circumferential direction length of the contact patch when the tire is mounted on the rim, filled with the prescribed internal pressure, and loaded with the maximum load, and

"ground contact width" refers to a maximum width of the contact patch in the tire width direction when the tire is mounted on the rim, filled with the prescribed internal pressure, and loaded with the maximum load.

3. A pneumatic radial tire (1) for passenger vehicles, comprising a tread (5), wherein

sectional width SW of the tire (1) is less than 165 mm,

a ratio SW/OD of the sectional width SW to outer diameter OD of the tire (1) is 0.26 or less, or the sectional width SW (mm) and the outer diameter OD (mm) of the tire (1) satisfy the relational equation OD (mm) $\geq$ -0.0187 $\times$ SW (mm)$^2$ + 9.15 $\times$ SW (mm) - 380 (mm),

gauge of the tread (5) on a tire equatorial plane (CL) is greater than an average value of gauges of the tread (5) at positions 20 % of ground contact width inward in a tire width direction from both ground contact edges,

when the tire (1) is mounted on a rim, filled with a prescribed internal pressure, and subjected to a maximum load, grooves in a contact patch consist only of grooves having a groove width of 2 mm or less,

the contact patch includes one or more block-shaped land portions (9) defined by two or more circumferential grooves extending in a tire circumferential direction or at an inclination angle of less than 45° to the tire circumferential direction and two or more width direction grooves extending in a tire width direction or at an inclination angle of 45° or less to the tire width direction, and

"ground contact edges" refers to both edges in the tire width direction of a contact patch when the tire is mounted on the rim, filled with the prescribed internal pressure, and subjected to a maximum load,

"prescribed internal pressure" refers to an air pressure (maximum air pressure) corresponding to a maximum load capability of a single wheel of an applicable size and ply rating described in the industrial standard of JATMA or the like, and in the case of a size that is not described in the industrial standards above, "prescribed internal pressure" refers to an air pressure (maximum air pressure) corresponding to a maximum load capability prescribed for each vehicle on which the tire is mounted,

"ground contact length" refers to a tire circumferential direction length of the contact patch when the tire is mounted on the rim, filled with the prescribed internal pressure, and loaded with the maximum load,

"gauge" refers to the gauge from an outermost reinforcement layer in the tire radial direction to the tread surface among the reinforcement layers arranged outward from the crown portion of the carcass in the tire radial direction, and is measured in a normal line direction relative to the tread surface under reference conditions where the tire is mounted on the rim, filled with the prescribed internal pressure, and unloaded, and in the case that the location where the gauge is to be measured includes a circumferential groove, the gauge is measured along a virtual line as if there were no circumferential groove,

"ground contact width" refers to a maximum width of the contact patch in the tire width direction when the tire is mounted on the rim, filled with the prescribed internal pressure, and loaded with the maximum load.

4. The pneumatic radial tire (1) for passenger vehicles according to any one of claims 1 to 3, wherein the circumferential grooves are circumferential sipes each having a groove width of 2 mm or less, the width direction grooves are width direction sipes each having a groove width of 2 mm or less, and the width direction sipes are flat plate-like sipes, and "flat plate-like" means that the groove width is substantially constant from the groove opening to the groove bottom, but the groove bottom may have curvature, or the groove may be a flask-shaped sipe with a widened groove bottom.

5. The pneumatic radial tire (1) for passenger vehicles according to any one of claims 1 to 4, wherein an area of at least one of the one or more block-shaped land portions (9) is 1/10 or less of an area of the contact patch.

6. The pneumatic radial tire (1) for passenger vehicles according to claim 5, wherein the one or more block-shaped land portions (9) is a plurality of block-shaped land portions (9), and the area of each of 80 % or more of the block-shaped land portions (9) is 1/10 or less of the area of the contact patch.

7. The pneumatic radial tire (1) for passenger vehicles according to claim 6, wherein a largest area among the block-shaped land portions (9) is 1/10 or less of the area of the contact patch.

8. The pneumatic radial tire (1) for passenger vehicles according to any one of claims 1 to 7, wherein the width direction grooves are connected to the ground contact edges on one side or the other side in the tire width direction.

9. The pneumatic radial tire (1) for passenger vehicles according to claim 4, wherein the width direction sipes or hole-shaped sipes having a diameter of 2 mm or less are provided to a vehicle-mounted outward side, which is a tire width direction half portion with the tire equatorial plane as a boundary, wherein "diameter" of a hole-shaped sipe means maximum diameter in a planar view.

**Patentansprüche**

1. Radialer Luftreifen (1) für Personenkraftwagen, der eine Lauffläche (5) umfasst, wobei

eine Querschnittsbreite SW des Reifens (1) weniger als 165 mm beträgt,
ein Verhältnis SW/OD der Querschnittsbreite SW zu einem Außendurchmesser OD des Reifens 0,26 oder weniger beträgt oder die Querschnittsbreite SW (mm) und der Außendurchmesser OD (mm) des Reifens (1) die Beziehungsgleichung OD (mm) $\geq$ - 0,0187 $\times$ SW (mm)$^2$ + 9,15 $\times$ SW (mm) - 380 (mm) erfüllen,
in einem Querschnitt in Reifenbreitenrichtung, unter Referenzbedingungen, wobei der Reifen (1) auf einer Felge montiert, mit einem vorgeschriebenen Innendruck gefüllt und ohne Belastung ist, wenn eine gerade Linie, die durch einen Punkt auf einer Lauffläche auf einer Reifenäquatorialebene (CL) hindurchgeht und parallel zu einer Reifenbreitenrichtung ist, m1 ist, eine gerade Linie, die durch Bodenberührungskanten E hindurchgeht und parallel zu der Reifenbreitenrichtung ist, m2 ist, eine Entfernung zwischen der geraden Linie m1 und der geraden Linie m2 in einer Reifenradialrichtung eine Fallhöhe $L_{CR}$ ist, und eine Laufflächenbreite des Reifens (1) TW ist, ein Verhältnis $L_{CR}$/TW größer als 0,045 ist,
wenn der Reifen (1) auf der Felge montiert, mit dem vorgeschriebenen Innendruck gefüllt und einer maximalen Belastung ausgesetzt ist, Rillen in einer Aufstandsfläche nur als Rillen bestehen, die eine Rillenbreite von 2 mm oder weniger aufweisen,
die Aufstandsfläche einen oder mehrere blockförmige Stegabschnitte (9) einschließt, die durch zwei oder mehr umlaufende Rillen, die sich in einer Reifenumfangsrichtung oder mit einem Neigungswinkel von weniger als 45° zu der Reifenumfangsrichtung erstrecken, und zwei oder mehr Breitenrichtungsrillen, die sich in einer Reifenbreitenrichtung oder mit einem Neigungswinkel von 45° oder weniger zu der Reifenbreitenrichtung erstrecken, definiert werden,
sich "Bodenberührungskanten" auf beide Kanten in der Reifenbreitenrichtung einer Aufstandsfläche, bezieht, wenn der Reifen auf der Felge montiert, mit dem vorgeschriebenen Innendruck gefüllt und einer maximalen Belastung ausgesetzt ist, und
sich "vorgeschriebener Innendruck" auf einen Luftdruck (maximalen Luftdruck) bezieht, der einer maximalen Tragfähigkeit eines einzelnen Rades mit einer anwendbaren Größe und Lagenkennzahl entspricht, die in dem industriellen Standard der JATMA oder dergleichen beschrieben werden, und im Fall einer Größe, die nicht in den obigen industriellen Standards beschrieben wird, sich der "vorgeschriebene Innendruck" auf einen Luftdruck (maximalen Luftdruck) bezieht, der einer maximalen Tragfähigkeit entspricht, die für jedes Fahrzeug vorgeschrieben ist, an dem der Reifen montiert ist.

2. Radialer Luftreifen (1) für Personenkraftwagen, der eine Lauffläche (5) umfasst, wobei

eine Querschnittsbreite SW des Reifens (1) weniger als 165 mm beträgt,
ein Verhältnis SW/OD der Querschnittsbreite SW zu einem Außendurchmesser OD des Reifens (1) 0,26 oder weniger beträgt oder die Querschnittsbreite SW (mm) und der Außendurchmesser OD (mm) des Reifens (1) die Beziehungsgleichung OD (mm) $\geq$ - 0,0187 $\times$ SW (mm)$^2$ + 9,15 $\times$ SW (mm) - 380 (mm) erfüllen,
eine Bodenberührungslänge auf einer Reifenäquatorialebene (CL) länger ist als ein durchschnittlicher Wert von Bodenberührungslängen an Positionen 20 % der Bodenberührungsbreite von den beiden Bodenberührungskanten aus in einer Reifenbreitenrichtung nach innen,
wenn der Reifen (1) auf einer Felge montiert, mit einem vorgeschriebenen Innendruck gefüllt und einer maximalen Belastung ausgesetzt ist, Rillen in einer Aufstandsfläche nur als Rillen bestehen, die eine Rillenbreite von 2 mm oder weniger aufweisen,
die Aufstandsfläche einen oder mehrere blockförmige Stegabschnitte (9) einschließt, die durch zwei oder mehr umlaufende Rillen, die sich in einer Reifenumfangsrichtung oder mit einem Neigungswinkel von weniger als 45° zu der Reifenumfangsrichtung erstrecken, und zwei oder mehr Breitenrichtungsrillen, die sich in einer Reifenbreitenrichtung oder mit einem Neigungswinkel von 45° oder weniger zu der Reifenbreitenrichtung erstrecken, definiert werden,

sich "Bodenberührungskanten" auf beide Kanten in der Reifenbreitenrichtung einer Aufstandsfläche, bezieht, wenn der Reifen auf der Felge montiert, mit dem vorgeschriebenen Innendruck gefüllt und einer maximalen Belastung ausgesetzt ist,

sich "vorgeschriebener Innendruck" auf einen Luftdruck (maximalen Luftdruck) bezieht, der einer maximalen Tragfähigkeit eines einzelnen Rades mit einer anwendbaren Größe und Lagenkennzahl entspricht, die in dem industriellen Standard der JATMA oder dergleichen beschrieben werden, und im Fall einer Größe, die nicht in den obigen industriellen Standards beschrieben wird, sich der "vorgeschriebene Innendruck" auf einen Luftdruck (maximalen Luftdruck) bezieht, der einer maximalen Tragfähigkeit entspricht, die für jedes Fahrzeug vorgeschrieben ist, an dem der Reifen montiert ist,

sich "Bodenberührungslänge" auf eine Länge der Aufstandsfläche in der Reifenumfangsrichtung bezieht, wenn der Reifen auf der Felge montiert, mit dem vorgeschriebenen Innendruck gefüllt und mit der maximalen Belastung belastet ist, und

sich "Bodenberührungsbreite" auf eine maximale Breite der Aufstandsfläche in der Reifenumfangsrichtung bezieht, wenn der Reifen auf der Felge montiert, mit dem vorgeschriebenen Innendruck gefüllt und mit der maximalen Belastung belastet ist.

3. Radialer Luftreifen (1) für Personenkraftwagen, der eine Lauffläche (5) umfasst, wobei

eine Querschnittsbreite SW des Reifens (1) weniger als 165 mm beträgt,

ein Verhältnis SW/OD der Querschnittsbreite SW zu einem Außendurchmesser OD des Reifens (1) 0,26 oder weniger beträgt oder die Querschnittsbreite SW (mm) und der Außendurchmesser OD (mm) des Reifens (1) die Beziehungsgleichung OD (mm) $\geq$ - 0,0187 $\times$ SW (mm)$^2$ + 9,15 $\times$ SW (mm) - 380 (mm) erfüllen,

eine Dicke der Lauffläche (5) auf einer Reifenäquatorialebene (CL) größer ist als ein durchschnittlicher Wert von Dicken der Lauffläche (5) an Positionen 20 % der Bodenberührungsbreite von den beiden Bodenberührungskanten aus in einer Reifenbreitenrichtung nach innen,

wenn der Reifen (1) auf einer Felge montiert, mit einem vorgeschriebenen Innendruck gefüllt und einer maximalen Belastung ausgesetzt ist, Rillen in einer Aufstandsfläche nur als Rillen bestehen, die eine Rillenbreite von 2 mm oder weniger aufweisen,

die Aufstandsfläche einen oder mehrere blockförmige Stegabschnitte (9) einschließt, die durch zwei oder mehr umlaufende Rillen, die sich in einer Reifenumfangsrichtung oder mit einem Neigungswinkel von weniger als 45° zu der Reifenumfangsrichtung erstrecken, und zwei oder mehr Breitenrichtungsrillen, die sich in einer Reifenbreitenrichtung oder mit einem Neigungswinkel von 45° oder weniger zu der Reifenbreitenrichtung erstrecken, definiert werden,

sich "Bodenberührungskanten" auf beide Kanten in der Reifenbreitenrichtung einer Aufstandsfläche bezieht, wenn der Reifen auf der Felge montiert, mit dem vorgeschriebenen Innendruck gefüllt und einer maximalen Belastung ausgesetzt ist,

sich "vorgeschriebener Innendruck" auf einen Luftdruck (maximalen Luftdruck) bezieht, der einer maximalen Tragfähigkeit eines einzelnen Rades mit einer anwendbaren Größe und Lagenkennzahl entspricht, die in dem industriellen Standard der JATMA oder dergleichen beschrieben werden, und im Fall einer Größe, die nicht in den obigen industriellen Standards beschrieben wird, sich der "vorgeschriebene Innendruck" auf einen Luftdruck (maximalen Luftdruck) bezieht, der einer maximalen Tragfähigkeit entspricht, die für jedes Fahrzeug vorgeschrieben ist, an dem der Reifen montiert ist,

sich "Bodenberührungslänge" auf eine Länge der Aufstandsfläche in der Reifenumfangsrichtung bezieht, wenn der Reifen auf der Felge montiert, mit dem vorgeschriebenen Innendruck gefüllt und mit der maximalen Belastung belastet ist, und

sich "Dicke" auf die Dicke von einer äußersten Verstärkungsschicht in der Reifenradialrichtung zu der Lauffläche unter den Verstärkungsschichten, die von dem Scheitelabschnitt der Karkasse in der Reifenradialrichtung nach außen angeordnet sind, bezieht und in einer Normalenrichtung im Verhältnis zu der Lauffläche unter Referenzbedingungen, wobei der Reifen auf der Felge montiert, mit dem vorgeschriebenen Innendruck gefüllt und ohne Belastung ist, gemessen wird und in dem Fall, dass die Position, wo die Dicke gemessen werden soll, eine umlaufende Rille einschließt, die Dicke entlang einer virtuellen Linie, als ob es keine umlaufende Rille gäbe, gemessen wird,

sich "Bodenberührungsbreite" auf eine maximale Breite der Aufstandsfläche in der Reifenbreitenrichtung bezieht, wenn der Reifen auf der Felge montiert, mit dem vorgeschriebenen Innendruck gefüllt und mit der maximalen Belastung belastet ist.

4. Radialer Luftreifen (1) für Personenkraftwagen nach einem der Ansprüche 1 bis 3, wobei die umlaufenden Rillen umlaufende Lamellen sind, die jeweils eine Rillenbreite von 2 mm oder weniger aufweisen, die Breitenrichtungsrillen Breitenrichtungslamellen sind, die jeweils eine Rillenbreite von 2 mm oder weniger aufweisen, und die Breitenrichtungslamellen flache plattenartige Lamellen sind, und

"flach plattenartig" bedeutet, dass die Rillenbreite von der Rillenöffnung bis zur Rillensohle im Wesentlichen konstant ist, aber die Rillensohle eine Krümmung aufweisen kann, oder die Rille eine flaschenförmige Lamelle mit einer verbreiterten Rillensohle sein kann.

5. Radialer Luftreifen (1) für Personenkraftwagen nach einem der Ansprüche 1 bis 4, wobei eine Fläche mindestens eines von dem einen oder den mehreren blockförmigen Stegabschnitten (9) 1/10 oder weniger einer Fläche der Aufstandsfläche beträgt.

6. Radialer Luftreifen (1) für Personenkraftwagen nach Anspruch 5, wobei der eine oder die mehreren blockförmigen Stegabschnitte (9) eine Vielzahl von blockförmigen Stegabschnitten (9) ist und die Fläche von 80 % oder mehr der blockförmigen Stegabschnitte (9) 1/10 oder weniger der Fläche der Aufstandsfläche beträgt.

7. Radialer Luftreifen (1) für Personenkraftwagen nach Anspruch 6, wobei eine größte Fläche unter den blockförmigen Stegabschnitten (9) 1/10 oder weniger der Fläche der Aufstandsfläche beträgt.

8. Radialer Luftreifen (1) für Personenkraftwagen nach einem der Ansprüche 1 bis 7, wobei die Breitenrichtungsrillen mit den Bodenberührungskanten auf der einen Seite oder der anderen Seite in der Reifenbreitenrichtung verbunden sind.

9. Radialer Luftreifen (1) für Personenkraftwagen nach Anspruch 4, wobei Breitenrichtungslamellen oder lochförmigen Lamellen, die einen Durchmesser von 2 mm oder weniger aufweisen, auf einer bei Fahrzeugmontage äußeren Seite bereitgestellt werden, die ein in Reifenbreitenrichtung halber Abschnitt mit der Reifenäquatorialebene als Grenze ist, wobei "Durchmesser" einer lochförmigen Lamelle einen maximalen Durchmesser in einer Draufsicht bedeutet.

**Revendications**

1. Pneumatique radial (1) pour voitures de tourisme, comprenant une bande de roulement (5), dans lequel :

la largeur de section SW du pneumatique (1) est inférieure à 165 mm,
un rapport SW/OD entre la largeur de section SW et le diamètre extérieur OD du pneumatique correspond à 0,26 ou moins, ou la largeur de section SW (mm) et le diamètre extérieur OD (mm) du pneumatique (1) satisfont l'équation relationnelle OD (mm) $\geq$ - 0,0187 x SW (mm)$^2$ + 9,15 x SW (mm) - 380 (mm),
vu en section transversale, dans le sens de la largeur du pneumatique, dans des conditions de référence dans lesquelles le pneumatique (1) est monté sur une jante, gonflé à une pression interne prescrite et non chargé, lorsqu'une ligne droite passant par un point présent sur une surface de la bande de roulement, sur un plan équatorial du pneumatique (CL), et parallèle au sens de la largeur du pneumatique, correspond à m1, qu'une ligne droite passant par des bords de contact avec le sol E et parallèle au sens de la largeur du pneumatique correspond à m2, qu'une distance entre la ligne droite m1 et la ligne droite m2, dans le sens radial du pneumatique, correspond à une hauteur de chute $L_{CR}$, et qu'une largeur de la bande de roulement du pneumatique (1) correspond à TW, un rapport $L_{CR}$/TW est supérieur à 0,045,
lorsque le pneumatique (1) est monté sur la jante, gonflé à une pression interne prescrite et soumis à une charge maximale, des rainures dans une surface de contact sont constituées uniquement par des rainures ayant une largeur de 2 mm ou moins,
la surface de contact inclut une ou plusieurs parties d'appui en forme de pavé (9) définies par au moins deux rainures circonférentielles s'étendant dans le sens circonférentiel du pneumatique ou à un angle d'inclinaison de moins de 45° par rapport au sens circonférentiel du pneumatique, et au moins deux rainures de largeur s'étendant dans le sens de la largeur du pneumatique ou à un angle d'inclinaison de 45° ou moins par rapport au sens de la largeur du pneumatique,
les « bords de contact avec le sol » désignent les deux bords, dans le sens de la largeur du pneumatique, d'une surface de contact existant lorsque le pneumatique est monté sur la jante, gonflé à la pression interne prescrite et soumis à une charge maximale, et
la « pression interne prescrite » désigne une pression d'air (pression d'air maximale) correspondant à une capacité de charge maximale d'une seule roue d'une taille applicable et d'un indice de pli décrits dans la norme industrielle JATMA ou similaire, et dans le cas d'une taille non décrite dans les normes industrielles ci-dessus, la « pression interne prescrite » désigne une pression d'air (pression d'air maximale) correspondant à une capacité de charge maximale prescrite pour chaque véhicule sur lequel le pneumatique est monté.

2. Pneumatique radial (1) pour voitures de tourisme, comprenant une bande de roulement (5), dans lequel :

la largeur de section SW du pneumatique (1) est inférieure à 165 mm,
un rapport SW/OD entre la largeur de section SW et le diamètre extérieur OD du pneumatique correspond à 0,26 ou moins, ou la largeur de section SW (mm) et le diamètre extérieur OD (mm) du pneumatique (1) satisfont l'équation relationnelle OD (mm) $\geq$ - 0,0187 x SW (mm)$^2$ + 9,15 x SW (mm) - 380 (mm),
la longueur de contact avec le sol sur un plan équatorial du pneumatique (CL) est plus longue qu'une valeur moyenne des longueurs de contact avec le sol au niveau de positions à 20 % de la largeur de contact avec le sol, vers l'intérieur, dans le sens de la largeur du pneumatique, à partir des deux bords de contact avec le sol,
lorsque le pneumatique (1) est monté sur une jante, gonflé à une pression interne prescrite et soumis à une charge maximale, des rainures dans une surface de contact sont constituées uniquement par des rainures ayant une largeur de 2 mm ou moins,
la surface de contact inclut une ou plusieurs parties d'appui en forme de pavé (9) définies par au moins deux rainures circonférentielles s'étendant dans le sens circonférentiel du pneumatique ou à un angle d'inclinaison de moins de 45° par rapport au sens circonférentiel du pneumatique, et au moins deux rainures de largeur s'étendant dans le sens de la largeur du pneumatique ou à un angle d'inclinaison de 45° ou moins par rapport au sens de la largeur du pneumatique,
les « bords de contact avec le sol » désignent les deux bords, dans le sens de la largeur du pneumatique, d'une surface de contact existant lorsque le pneumatique est monté sur la jante, gonflé à la pression interne prescrite et soumis à une charge maximale,
la « pression interne prescrite » désigne une pression d'air (pression d'air maximale) correspondant à une capacité de charge maximale d'une seule roue d'une taille applicable et d'un indice de pli décrits dans la norme industrielle JATMA ou similaire, et dans le cas d'une taille non décrite dans les normes industrielles ci-dessus, la « pression interne prescrite » désigne une pression d'air (pression d'air maximale) correspondant à la capacité de charge maximale prescrite pour chaque véhicule sur lequel le pneumatique est monté,
la « longueur de contact avec le sol » désigne une longueur, dans le sens circonférentiel du pneumatique, de la surface de contact existant lorsque le pneumatique est monté sur la jante, gonflé à la pression interne prescrite et chargé à la charge maximale, et
la « largeur de contact avec le sol » désigne une largeur maximale de la surface de contact, dans le sens de la largeur du pneumatique, lorsque le pneumatique est monté sur la jante, gonflé à la pression interne prescrite et chargé à la charge maximale.

3. Pneumatique radial (1) pour voitures de tourisme, comprenant une bande de roulement (5), dans lequel :

la largeur de section SW du pneumatique (1) est inférieure à 165 mm,
un rapport SW/OD entre la largeur de section SW et le diamètre extérieur OD du pneumatique correspond à 0,26 ou moins, ou la largeur de section SW (mm) et le diamètre extérieur OD (mm) du pneumatique (1) satisfont l'équation relationnelle OD (mm) $\geq$ - 0,0187 x SW (mm)$^2$ + 9,15 x SW (mm) - 380 (mm),
l'épaisseur de la bande de roulement (5) sur un plan équatorial du pneumatique (CL) est supérieure à une valeur moyenne des épaisseurs de la bande de roulement (5) au niveau de positions à 20 % de la largeur de contact avec le sol, vers l'intérieur, dans le sens de la largeur du pneumatique, à partir des deux bords de contact avec le sol, lorsque le pneumatique (1) est monté sur la jante, gonflé à une pression interne prescrite et soumis à une charge maximale, des rainures dans une surface de contact sont constituées uniquement par des rainures ayant une largeur de 2 mm ou moins,
la surface de contact inclut une ou plusieurs parties d'appui en forme de pavés (9) définies par au moins deux rainures circonférentielles s'étendant dans le sens circonférentiel du pneumatique ou à un angle d'inclinaison de moins de 45° par rapport au sens circonférentiel du pneumatique, et au moins deux rainures de largeur s'étendant dans le sens de la largeur du pneumatique ou à un angle d'inclinaison de 45° ou moins par rapport au sens de la largeur du pneumatique,
les « bords de contact avec le sol » désignent les deux bords, dans le sens de la largeur du pneumatique, d'une surface de contact existant lorsque le pneumatique est monté sur la jante, gonflé avec la pression interne prescrite et soumis à une charge maximale, et
la « pression interne prescrite » désigne une pression d'air (pression d'air maximale) correspondant à une capacité de charge maximale d'une seule roue d'une taille applicable et d'un indice de pli décrits dans la norme industrielle JATMA ou similaire, et dans le cas d'une taille non décrite dans les normes industrielles ci-dessus, « pression interne prescrite » fait référence à une pression d'air (pression d'air maximale) correspondant à la capacité de charge maximale prescrite pour chaque véhicule sur lequel le pneumatique est monté,

la « longueur de contact avec le sol » désigne une longueur, dans le sens circonférentiel du pneumatique, de la surface de contact existant lorsque le pneumatique est monté sur la jante, gonflé à la pression interne prescrit et chargé à la charge maximale, et

l'« épaisseur de la bande de roulement » désigne l'épaisseur, partant d'une couche de renforcement la plus extérieure, dans le sens radial du pneumatique, vers la surface de bande de roulement, parmi les couches de renforcement agencées vers l'extérieur de la partie de sommet de la carcasse, dans le sens radial du pneumatique, et est mesurée dans une direction linéaire normal à la surface de la bande de roulement, dans des conditions de référence dans lesquelles le pneumatique est monté sur la jante, gonflé à la pression interne prescrite et non chargé, et dans le cas où l'emplacement au niveau duquel ladite épaisseur doit être mesurée inclut une rainure circonférentielle, l'épaisseur est mesurée le long d'une ligne virtuelle dépourvue de toute rainure circonférentielle,

la « largeur de contact avec le sol » désigne une largeur maximale de la surface de contact, dans le sens de la largeur du pneumatique, lorsque le pneumatique est monté sur la jante, gonflé à la pression interne prescrite et chargé à la charge maximale.

4. Pneumatique radial (1) pour voitures de tourisme selon l'une quelconque des revendications 1 à 3, dans lequel les rainures circonférentielles sont des lamelles circonférentielles ayant chacune une largeur de 2 mm ou moins, les rainures de largeur sont des lamelles de largeur ayant chacune une largeur de 2 mm ou moins, et les lamelles de largeur sont des lamelles plates en forme de plaque, et

l'expression « plate en forme de plaque » signifie que la largeur de la rainure est sensiblement constante, depuis l'ouverture de la rainure jusqu'au fond de la rainure, mais le fond de la rainure peut présenter une courbure, ou la rainure peut être une lamelle en forme de flacon avec un fond élargi.

5. Pneumatique radial (1) pour voitures de tourisme selon l'une quelconque des revendications 1 à 4, dans lequel la superficie de la ou d'au moins une des parties d'appui en forme de pavé (9) représente 1/10 ou moins de la superficie de la surface de contact.

6. Pneumatique radial (1) pour voitures de tourisme selon l'une quelconque des revendications 1 à 5, dans lequel la ou les parties d'appui en forme de pavé (9) sont constituées par une pluralité de parties d'appui en forme de pavé (9), et la superficie de chaque partie d'appui constituant 80 % ou plus des parties d'appui en forme de pavé (9) représente 1/10 ou moins de la superficie de la surface de contact.

7. Pneumatique radial (1) pour voitures de tourisme selon la revendication 6, dans lequel une superficie maximale parmi les parties d'appui en forme de pavé (9) représente 1/10 ou moins de la superficie de la surface de contact.

8. Pneumatique radial (1) pour voitures de tourisme selon l'une quelconque des revendications 1 à 7, dans lequel les rainures de largeur sont reliées aux bords de contact avec le sol sur un côté ou sur l'autre côté, dans le sens de la largeur du pneumatique.

9. Pneumatique radial (1) pour voitures de tourisme selon la revendication 4, dans lequel les lamelles de largeur ou des lamelles en forme de trou ayant un diamètre de 2 mm ou moins sont prévues sur un côté dit extérieur après montage sur véhicule, lequel constitue une demi-partie dans le sens de la largeur du pneumatique, délimitée par le plan équatorial du pneumatique, le « diamètre » de la lamelle en forme de trou désignant un diamètre maximal dans une vue en plan.

# FIG. 1

FIG. 2

# FIG. 3

Vehicle-mounted inward side

Vehicle-mounted outward side

# FIG. 4

Vehicle-mounted inward side

Vehicle-mounted outward side

FIG. 5

FIG. 6

# FIG. 7

**REFERENCES CITED IN THE DESCRIPTION**

**Patent documents cited in the description**

- WO 2011135774 A1
- EP 2774780 A1
- US 2016001603 A1